# EUROPEAN PATENT APPLICATION

(11) **EP 3 552 851 A1**
(43) Date of publication of application: **16.10.2019**
(21) Application number: 18382239.4
(22) Date of filing: 09.04.2018
(51) Int. Cl.: B60G 21/055, F16B 7/18, F16C 11/06

(54) **FIXING DEVICE FOR FIXING A STABILIZER LINK TO A HOLLOW BAR**

(71) Applicant: Engineering Developments for Automotive Industry, S.L., 48430 Amorebieta (Bizkaia) (ES)
(72) Inventor: GONZÁLEZ PÉREZ, Eduardo, 48340 AMOREBIETA (BIZKAIA) (ES); LIETZ-SENZEL, Marko, 44229 DORTMUND (DE); POLENKOWSKI, Hendrik, Matthias, 48180 BIZKAIA (ES); SCHUBERT, Carsten, 99089 ERFURT (DE); MACEDO, Sergio, 99631 WEISSENSEE (DE); DITZER, Boris, 57399 KIRCHHUNDEM (DE); FERNÁNDEZ GONZÁLEZ, Javier, 48950 ERANDIO (Bizkaia) (ES)
(74) Representative: Herrero & Asociados, S.L.

(57) **Abstract**

The present invention relates to a fixing device for fixing a stabilizer link (1) to a hollow bar (2), said device comprising a ball and socket joint with a spherical head (3) and a bolt (4), comprising a plastic bushing (6) injection molded over the spherical head (3) or the bolt (4), with a body with a first end (7), a central area (8), and a perimetral area (9) projecting from same; where the central area (8) is suitable for being fitted into the bar (2) and has a cylindrical outer shape and a closed free end (8.1); where the perimetral area (9) has a tubular outer shape concentric to the central area (8), such that the bushing (6) has a hollow cylindrical space (10) suitable for the end (2.1) of the bar (2) to be fitted therein; and fixing means for fixing the bushing (6) in the bar (2).

## Description

### Technical Field of the Invention

The present invention relates to the technical field of fixing devices for fixing a stabilizer link or the like to a hollow bar, such as a torsion bar or a stabilizer bar, at an end thereof, where said fixing device comprises a ball and socket joint having respective opposite ends formed by a spherical head and a bolt, respectively, and an intermediate area having a flange.

### Background of the Invention

The attachment of a stabilizer link at the end of a hollow bar, which is required in a number of applications, is currently done by flattening the end of the hollow bar to then drill a hole in said flattened area and place in said drilled hole the bolt of a ball and socket joint fixed in place by means of a nut, for example.

Specifically, attachments of this type are used in the vehicle chassis, for example in the attachment of the ends of the torsion bar with suspension shafts, or in the attachment of the ends of stabilizer bars with connecting stabilizer links for connection to the shock absorber. In this case, the suspension shafts or connecting stabilizer links in each case are attached with the corresponding bar in the manner indicated above.

This way of fixing a stabilizer link to the end of a hollow bar has a series of drawbacks due primarily to the costs that said flattening and subsequent drilling entail. Furthermore, even though the attachment thus achieved does fix the end of the stabilizer link to the end of the bar, it is not a leak-tight attachment, so internal corrosions of the bar occur over time. In addition to the foregoing, there is a need to use fixing elements, such as nuts in the case of a threaded bolt, which may come loose due to the stresses of the attachment and the vibrations to which parts of this type are subjected during normal operation.

In the case of vehicles, this drawback causes operating problems and a lack of precision, which lead to failures in the safety thereof.

No case solving these problems can be found in the state of the art.

### Description of the Invention

The fixing device for fixing a stabilizer link to a hollow bar at an end thereof, where said fixing device comprises a ball and socket joint having respective opposite ends formed by a spherical head and a bolt, respectively, and an intermediate area having a flange, comprises a bushing formed by plastic material, injection molded over the spherical head or the bolt, having a body with a circular-shaped first end the diameter of which is greater than the diameter of the end of the bar and a central area projecting from a first side of the first end and fixing means for fixing the bushing to the end of the bar in which it is fitted.

The central area is suitable for being fitted into an end of the bar and has a cylindrical outer shape and a closed free end.

On the other hand, the possibility of including a perimetral area projecting from the first side of the first end is contemplated. Said perimetral area has a tubular shape arranged outside the central area and concentric thereto, such that the bushing has, between said central area and said perimetral area, a hollow cylindrical space suitable for the end of the bar to be fitted therein.

According to a preferred embodiment, the bushing is injection molded over the bolt, such that the bolt is arranged inside the central area of the bushing, the longitudinal axis of the bolt coinciding with the longitudinal axis of said central area, and where said central area has a length greater than the length of the bolt.

According to another preferred embodiment, the first end of the bushing has a thickness greater than the diameter of the bolt and the bushing is injection molded over said bolt, such that said bolt is arranged inside the first end of the bushing, the longitudinal axis of the bolt being arranged such that it does not coincide with the longitudinal axis of the central area of the bushing.

On the other hand, according to another preferred embodiment, the first end of the bushing has a thickness greater than the diameter of the spherical head and the bushing is injection molded over said spherical head, such that said spherical head is arranged inside the first end of the bushing. In this embodiment, the plastic is injection molded such that said spherical head is capable of relative movement with respect to the bushing that is injection molded over it, but without there being any possibility of removing the spherical head with respect to the bushing.

In the embodiments in which the bushing is injection molded over the spherical head or the bolt, but with the end of the ball and socket joint over which the bushing is injection molded being inside the first end of said bushing, it may be necessary to include a metal reinforcement element surrounding the end of the ball and socket joint which is in the area of the first end of the bushing, having a geometry such that it is also arranged in the central area of the bushing, reinforcing it.

In any of the preceding cases, in a preferred embodiment, the fixing means for fixing the bushing to the end of the bar in which it is fitted are formed by an adhesive arranged on the outer side surface of at least part of the central area of the bushing.

In this case and according to a preferred embodiment, the bushing comprises a containment guide for the adhesive arranged on the outer side surface of the free end of the central area.

Optionally, the adhesive can also be arranged on the inner side surface of at least part of the perimetral area of the bushing.

In any of the cases in which the bushing is injection molded over the bolt, and according to a preferred embodiment, said bolt comprises anti-removal means. Optionally, the possibility of including anti-rotation means in said bolt is considered.

In this case and according to a preferred embodiment, the anti-removal means are formed by perimetral corrugations arranged in the bolt.

According to a preferred embodiment, the anti-rotation means are formed by polygonal machined formations arranged in the bolt.

According to another aspect, in a preferred embodiment, the length of the perimetral area of the bushing is smaller than the length of the central area thereof.

The inclusion of a washer-type element which is arranged at one end of the bolt contacting the flange is considered as an alternative, said washer acting as a reinforcement of the point of attachment between the ball and socket joint and the bushing.

With the fixing device for fixing a stabilizer link to a hollow bar herein proposed, a significant improvement over the state of the art is obtained.

This is due to the attainment of a fixing method that is easy to perform and at the same time easy to use because once the bushing has been injection molded over the spherical head or the bolt, all that is left to do is simply place the adhesive on the indicated surfaces and introduce the central area of the bushing into the end of the hollow bar.

There is no longer any need to flatten said attachment or subsequently drill a hole in it, thereby producing savings in process costs.

Likewise, using the injection molded bushing made of a plastic material that is furthermore adhered by means of an adhesive at the end of the bar leads to a leak-tight attachment between the rod and the bar, and therefore prevents possible internal corrosions of said bar.

This allows the parts to be more durable and the mechanism in which the parts intervene to have a better performance, entailing an increased safety therein.

The invention is therefore a simple, practical, and effective device which successfully solves the problems existing in the state of the art in this type of fixing.

### Brief Description of the Drawings

For the purpose of aiding to better understand the features of the invention according to a preferred practical embodiment thereof, a series of drawings is attached as an integral part of said description in which the following has been depicted in an illustrative and non-limiting manner:
Figure 1 shows a perspective view of the bushing for a fixing device for fixing a stabilizer link to a hollow bar according to a preferred embodiment of the invention.
Figures 2.1 and 2.2 show a top plan view and a perspective view of the bushing, respectively, for a fixing device for fixing a stabilizer link to a hollow bar according to a preferred embodiment of the invention.
Figure 3 shows an elevational view of the bushing for a fixing device for fixing a stabilizer link to a hollow bar according to a preferred embodiment of the invention.
Figure 4 shows a view along section A-A' of the bushing for a fixing device for fixing a stabilizer link to a hollow bar, according to a preferred embodiment of the invention.
Figure 5 shows a section view of the fixing device for fixing a stabilizer link to a hollow bar according to a preferred embodiment of the invention.
Figure 6 shows a section view of the fixing device for fixing a stabilizer link to a hollow bar in which a washer-type element is arranged at the end of the bolt and in contact with the flange.

### Detailed Description of a Preferred Embodiment of the Invention

In view of the enclosed drawings it can be seen how, in a preferred embodiment of the invention, the fixing device for fixing a stabilizer link (1) to a hollow bar (2) at an end (2.1) thereof herein proposed comprises a ball and socket joint having respective opposite ends formed by a spherical head (3) and a bolt (4), respectively, and an intermediate area having a flange (5).

This fixing device comprises a bushing (6) formed by plastic material, injection molded over the spherical head (3) or the bolt (4), and fixing means for fixing the bushing (6) to the end (2.1) of the bar (2) in which it is fitted. In this preferred embodiment of the invention, the bushing (6) is injection molded over the bolt (4).

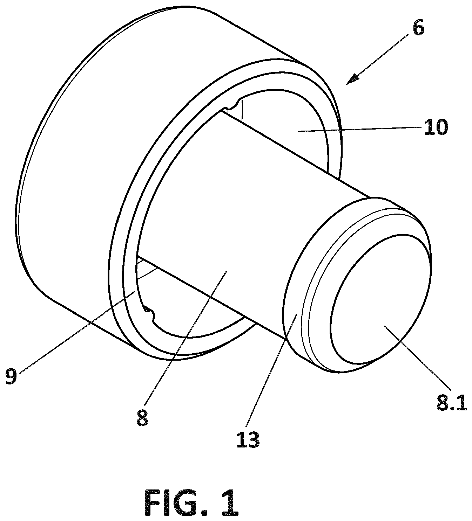

As seen in Figures 1 to 4, the bushing (6) has a body with a circular-shaped first end (7) the diameter of which is greater than the diameter of the end (2.1) of the bar (2) and a central area (8) projecting from a first side (7.1) of the first end (7).

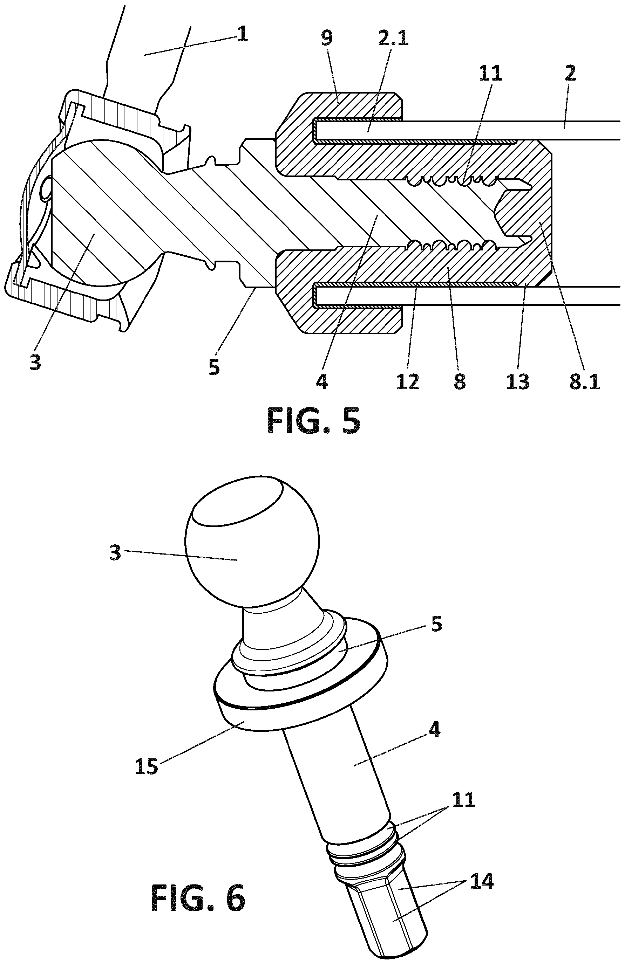

As seen in Figure 5, said central area (8) is suitable for being fitted into an end (2.1) of the bar (2) and has a cylindrical outer shape and a closed free end (8.1).

Additionally, the bushing (6) has a perimetral area (9) projecting from the first side (7.1) of the first end (7).

Likewise, as seen in Figures 1, 2.2, 3, and 4, the perimetral area (9) has a tubular shape arranged outside the central area (8) and concentric thereto, such that the bushing (6) has, between said central area and said perimetral area (8, 9), a hollow cylindrical space (10) suitable for the end (2.1) of the bar (2) to be fitted therein.

In this preferred embodiment of the invention, as indicated and as can be seen in Figure 5, the bushing (6) is injection molded over the bolt (4), such that the bolt (4) is arranged inside the central area (8) of the bushing (6), the longitudinal axis of the bolt (4) coinciding with the longitudinal axis of said central area (8), and where said central area (8) has a length greater than the length of the bolt (4).

Likewise, in this preferred embodiment of the invention, given that the bushing (6) is injection molded over the bolt (4), said bolt comprises anti-removal means that will reinforce the injection molded attachment between the bolt and the bushing (6), preventing movements between both. Said anti-removal means are formed by perimetral corrugations (11).

Likewise, the bolt (4) can have anti-rotation means formed by polygonal machined formations (14).

In this preferred embodiment of the invention, as shown in Figure 5, the fixing means for fixing the bushing (6) to the end (2.1) of the bar (2) in which it is fitted are formed by an adhesive (12) arranged on the outer side surface of at least part of the central area (8) of the bushing (6).

Additionally, the adhesive (12) can also be arranged on the inner side surface of at least part of the perimetral area (9).

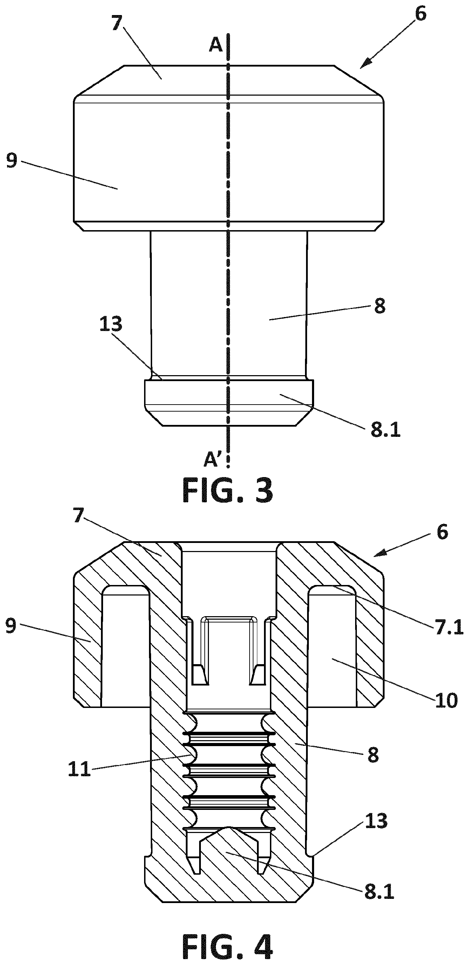

Likewise, in this embodiment, as can be seen in Figures 4 and 5, the bushing (6) comprises a containment guide (13) for the adhesive (12) arranged on the outer side surface of the free end (8.1) of the central area (8).

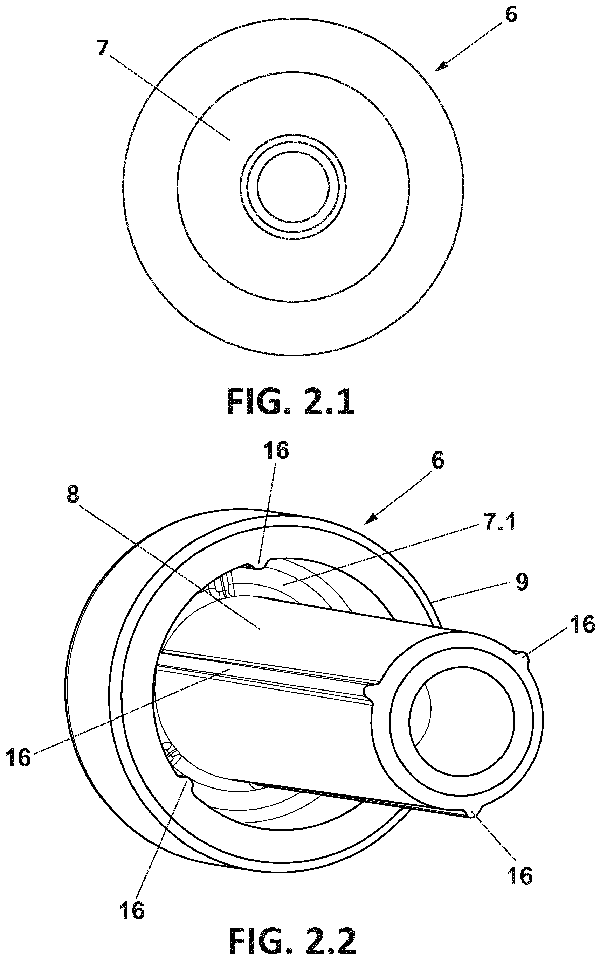

In the embodiment depicted in Figure 2.2, it is contemplated for the outer side surface of the central area (8) to comprise a plurality of grooves (16), which can also be arranged on the inner surface of the perimetral area (9), for the purpose of collaborating in the fixing of the bushing (6) to the end (2.1) of the bar (2).

On the other hand, in one embodiment of the invention, the length of the perimetral area (9) of the bushing (6) is smaller than the length of the central area (8) thereof.

In another possible embodiment, the first end (7) of the bushing (6) has a thickness greater than the diameter of the bolt (4) and the bushing (6) is injection molded over said bolt (4), such that said bolt (4) is arranged inside the first end (7) of the bushing (6), the longitudinal axis of the bolt (4) being arranged such that it does not coincide with the longitudinal axis of the central area (8) of the bushing (6).

On the other hand, according to another possible embodiment, the first end (7) of the bushing (6) has a thickness greater than the diameter of the spherical head (3) and the bushing (6) is injection molded over said spherical head (6), such that said spherical head (3) is arranged inside the first end (7) of the bushing (6). In this embodiment, the plastic is injection molded such that said spherical head (3) is capable of relative movement with respect to the bushing (6) that is injection molded over it, but with the spherical head (3) being prevented from being able to come out of the bushing (6) at all times.

In the two embodiments immediately above in which the bushing (6) is injection molded over the spherical head (3) or the bolt (4), but with the end of the ball and socket joint over which the bushing (6) is injected being inside the first end (7) of said bushing (6), it may be necessary to include a metal reinforcement element surrounding the end of the ball and socket joint which is in the area of the first end (7) of the bushing (6), having a geometry such that it is also arranged in the central area (8) of the bushing (6), reinforcing it.

The inclusion of a washer-type element, arranged in the bolt in contact with the flange, the purpose of which is to reinforce the point at which the ball and socket joint is attached to the bushing (6), is proposed as an alternative in order to reduce localized stresses to which the bushing (6) will be subjected at said point.

The embodiment that has been described only constitutes an example of the present invention, therefore the specific details, terms, and phrases in the present specification must not be considered limiting, but rather must be understood only as a basis for the claims and as a representative basis which provides a comprehensible description as well as sufficient information to the person skilled in the art for applying the present invention.

## Claims

1. Fixing device for fixing a stabilizer link (1) to a hollow bar (2) at an end (2.1) thereof, where said fixing device comprises a ball and socket joint having respective opposite ends formed by a spherical head (3) and a bolt (4), respectively, and an intermediate area having a flange (5), **characterized in that** it comprises:
- a bushing (6) formed by plastic material, injection molded over the spherical head (3) or the bolt (4), having a body with a circular-shaped first end (7) the diameter of which is greater than the diameter of the end (2.1) of the bar (2), and a central area (8) projecting from a first side (7.1) of the first end (7), where the central area (8) is suitable for being fitted into an end (2.1) of the bar (2) and has a cylindrical outer shape and a closed free end (8.1); and fixing means for fixing the bushing (6) to the end (2.1) of the bar (2) in which it is fitted.

2. Fixing device for fixing a stabilizer link (1) to a hollow bar (2) according to claim 1, wherein the bushing (6) additionally has a perimetral area (9) projecting from the first side (7.1) of the first end (7), and wherein said perimetral area (9) has a tubular shape arranged outside the central area (8) and concentric thereto, such that the bushing (6) has, between said central area (8) and said perimetral area (9), a hollow cylindrical space (10) suitable for the end (2.1) of the bar (2) to be fitted therein.

3. Fixing device for fixing a stabilizer link (1) to a hollow bar (2) according to claims 1 and 2, wherein the bushing (6) is injection molded over the bolt (4), such that the bolt (4) is arranged inside the central area (8) of the bushing (6), the longitudinal axis of the bolt (4) coinciding with the longitudinal axis of said central area (8), and wherein said central area (8) has a length greater than the length of the bolt (4).

4. Fixing device for fixing a stabilizer link (1) to a hollow bar (2) according to claims 1 and 2, wherein the first end (7) of the bushing (6) has a thickness greater than the diameter of the bolt (4) and the bushing (6) is injection molded over the bolt (4), such that said bolt (4) is arranged inside the first end (7) of the bushing (6), the longitudinal axis of the bolt (4) not coinciding with the longitudinal axis of the central area (8) of the bushing (6).

5. Fixing device for fixing a stabilizer link (1) to a hollow bar (2) according to claim 4, wherein a metal reinforcement element is arranged surrounding the end of the bolt which is in the area of the first end (7) of the bushing (6), having a geometry such that said metal reinforcement element is likewise arranged in at least part of the central area (8) of the bushing (6).

6. Fixing device for fixing a stabilizer link (1) to a hollow bar (2) according to claims 1 and 2, wherein the first end (7) of the bushing (6) has a thickness greater than the diameter of the spherical head (3) and the bushing (6) is injection molded over said spherical head (3), such that said spherical head (3) is arranged inside the first end (7) of the bushing (6), the spherical head maintaining relative movement with respect to the bushing (6) without the possibility of removal.

7. Fixing device for fixing a stabilizer link (1) to a hollow bar (2) according to claim 6, wherein a metal reinforcement element is arranged surrounding the spherical head (3) which is in the area of the first end (7) of the bushing (6), having a geometry such that said metal reinforcement element is likewise arranged in at least part of the central area (8) of the bushing (6).

8. Fixing device for fixing a stabilizer link (1) to a hollow bar (2) according to any of the preceding claims, wherein the fixing means for fixing the bushing (6) to the end (2.1) of the bar (2) in which it is fitted are formed by an adhesive (12) arranged on the outer side surface of at least part of the central area (8) of the bushing (6).

9. Fixing device for fixing a stabilizer link (1) to a hollow bar (2) according to claim 8, wherein the adhesive (12) is additionally arranged on the inner side surface of at least part of the perimetral area (9) of the bushing (6).

10. Fixing device for fixing a stabilizer link (1) to a hollow bar (2) according to claim 8, wherein the bushing (6) comprises a containment guide (13) for the adhesive (12) arranged on the outer side surface of the free end (8.1) of the central area (8).

11. Fixing device for fixing a stabilizer link (1) to a hollow bar (2) according to any of the preceding claims, wherein the bolt (4) comprises anti-removal means and anti-rotation means.

12. Fixing device for fixing a stabilizer link (1) to a hollow bar (2) according to claim 11, wherein the anti-removal means are formed by perimetral corrugations (11) arranged on the bolt (4).

13. Fixing device for fixing a stabilizer link (1) to a hollow bar (2) according to claims 11 and 12, wherein the anti-rotation means are formed by polygonal machined formations (14) arranged in the bolt (4).

14. Fixing device for fixing a stabilizer link (1) to a hollow bar (2) according to any of claims 2 to 13, wherein the length of the perimetral area (9) of the bushing (6) is smaller than the length of the central area (8) thereof.

15. Fixing device for fixing a stabilizer link (1) to a hollow bar (2) according to any of the preceding claims, wherein a washer is arranged in the bolt (4) in contact with the flange (5).
